# EUROPÄISCHE PATENTSCHRIFT

(11) **EP 2 592 295 B1**
(45) Veröffentlichungstag und Bekanntmachung des Hinweises auf die Patenterteilung: **20.08.2014**
(21) Anmeldenummer: 12007550.2
(22) Anmeldetag: 07.11.2012
(51) Int. Cl.: F16D 3/46

(54) **Gelenk für eine Gelenkwelle**
Joint for an articulated shaft
Articulation pour un arbre de transmission

(30) Priorität: 12.11.2011 DE 102011118655
(43) Veröffentlichungstag der Anmeldung: 15.05.2013
(73) Patentinhaber: Alfred Heyd GmbH & Co. KG, 74321 Bietigheim-Bissingen (DE)
(72) Erfinder: Heyd, Stefan, 71665 Vaihingen/Enz (DE)
(74) Vertreter: Hössle Patentanwälte Partnerschaft

(56) Entgegenhaltungen:
- DE-C- 266 759
- GB-A- 971 401
- US-A- 1 836 095
- US-A1- 2003 027 641

## Beschreibung

Die Erfindung betrifft ein Gelenk für eine Gelenkwelle zur Übertragung von Drehbewegungen und Drehmomenten sowie eine Gelenkgabel und ein Mittelstück für ein solches Gelenk.

Gelenke dienen zur Übertragung von Drehbewegungen und Drehmomenten, wie dies bei Gelenkwellen erforderlich ist. Gelenkwellen wiederum werden u.a. in Blech- und Bandrichtmaschinen eingesetzt, in denen bspw. Bleche vor deren Weiterverarbeitung gerichtet werden. Die Gelenkwellen treiben dabei Richtwalzen an, zwischen denen die Bleche gefördert und gerichtet werden.

Es sind eine Vielzahl von Gelenken und Kombination von Gelenken, in denen Gelenke paarweise eingesetzt werden können, zur Übertragung von Drehbewegungen bzw. zur Übertragung von Drehmomenten bekannt. Eine mögliche Ausführungsform von Gelenken zur Übertragung von Drehbewegungen sind Kardangelenke bzw. Kreuzgelenke. Diese bestehen aus zwei Gelenkhälften bzw. Gelenkschäften, die sich 90 Grad verdreht gegenüberstehen und durch ein Gelenkkreuz verbunden sind. Diese Ausführungsform gibt es in einfacher konstruktiver Gestaltung, nur mit Gleitflächen zwischen Gelenkschaft und Gelenkkreuz, sowie in hochwertiger Ausführung, wobei das Gelenkkreuz in Nadellagerbuchsen mit Nadellagern, die von den Gelenkschäften gehalten werden, gelagert ist.

Eine weiterhin verbreitete Ausführungsform von Gelenken sind die sogenannten Gleichlaufgelenke, wie diese vorwiegend für den Radantrieb von Kraftfahrzeugen verwendet werden. Diese bestehen vorzugsweise ebenfalls aus Gelenkhälften, wobei eine Seite topfförmig und die andere Seite nabenförmig ausgebildet ist, wobei die Kraftübertragung über kugelförmige Elemente erfolgt, die in Kontakt zwischen den beiden Gelenkhälften in entsprechenden Ausformungen gelagert sind.

Ein ebenfalls bekanntes Konzept eines Gelenks zur Übertragung von Drehbewegungen sind Gelenke, die auch als Kugelgelenke bezeichnet werden, die aus zwei gabelförmigen Gelenkschäften bestehen, die in ein sie verbindendes Zwischenteil bzw. Zwischenstück eingreifen. Bei dieser Ausführung bestehen die Gelenkschäfte aus einem Anschlussstück, das zur Anbindung an ein drehendes Gegenstück ausgebildet ist, sowie einem gegenüberliegenden gabelförmig ausgebildeten Endstück, das zwei Gabelstücke aufweist, deren mit dem Zwischenstück in Kontakt stehenden Oberflächen parallel zueinander ausgebildet sind.

Die zwei Gelenkschäfte stehen sich mit den gabelförmig ausgebildeten Gelenkschaftenden gegenüber und sind zueinander um 90 Grad verdreht. Die Gelenkgabeln greifen jeweils in das Zwischenstück ein, wobei das Zwischenstück vorzugsweise eine kugelförmige Hüllkurve aufweist und mit zwei umlaufenden Einstichen bzw. Einschnitten die im Winkel von 90 Grad zueinander stehen, ausgebildet ist, wobei die in Kontakt zu den Gelenkgabeln stehenden Kontaktflächen parallel zueinander angeordnet sind.

Dies bedeutet, dass die Einstiche bzw. Einschnitte in das kugelförmige Zwischenstück einen rechteckigen Querschnitt aufweisen. Ebenso weisen die Gelenkarme der Gelenkgabeln einen rechteckigen Querschnitt auf. Üblicherweise weist der innere Abstand der Gelenkarme am Ende der Arme einen kleineren Abstand als der innere Abstand der Gelenkarme am Gelenkdrehmittelpunkt, nämlich der Schnittpunkt der eine Drehbewegung übertragenden Eingangs- und Ausgangsachsen, auf.

Dies hat zur Folge, dass die Gelenkarme eines Gelenkschafts das Zwischenstück umgreifen und so in einem gewissen Rahmen auch eine Übertragung von Zugkräften über das Gelenk ermöglichen. Um eine Montage des Gelenks zu ermöglichen, weist das Zwischenstück in dem Bereich der Kreuzungen der Einstiche Abflachungen auf, die zueinander einen geringfügig kleineren Abstand aufweisen, als der innere Abstand der Gelenkgabeln am Armende misst.

Weiterhin weist einer der Gelenkschäfte im Bereich zwischen den Gelenkarmen eine Ausnehmung auf, um die Montage des Gelenks zu ermöglichen. In diese Ausnehmung muss während der Montage ein Gelenkarm des gegenüberliegenden Gelenkschafts eingreifen.

Eine Weiterentwicklung des vorstehend beschriebenen Gelenks bzw. Kugelgelenks wird in der Gebrauchsmusterschrift DE 203 18 737 U1 vorgestellt. In dieser ist ein Gelenk für eine Gelenkwelle beschrieben, das zwei Gelenkgabeln und ein kugelförmiges Zwischenstück, das als Mittelstück bezeichnet wird, mit vier jeweils im rechten Winkel zueinander angeordneten trapezförmigen Einschnitte umfasst, wobei in zwei einander gegenüberliegende Einschnitte jeweils eine Gelenkgabel mit ihren den Einschnitten entsprechenden Armen, die als Zinken bezeichnet werden, eingreift und die Gelenkgabeln jeweils ein Anschlussstück bzw. Anschlussabschnitt aufweisen.

In der genannten Druckschrift ist beschrieben, dass zur Steigerung der Drehmomentübertragungsmöglichkeit die Arme bzw. Zinken des Gelenkschafts trapezförmig ausgebildet sind. Entsprechend werden die zugeordneten Einschnitte des Zwischenstückes trapezförmig ausgestaltet. Die bei einer Überlastung dieser Gelenkkonstruktion üblicherweise abbrechenden Arme der Gelenkschäfte bzw. Gelenkgabeln sollen durch diesen Aufbau verstärkt werden.

Vergleichbare Gelenkkonstruktionen, die aus Gelenkschäften mit gabelförmiger Ausprägung und Zwischenstück bestehen, werden in der Druckschrift EP 0 048 564 A1, der Druckschrift EP 0 261 717 A1 sowie der Druckschrift EP 0 109 371 A1 beschrieben, wobei in diesen Fällen das Zwischenstück jeweils mehrteilig ausgeführt ist.

Weiterhin werden in der Druckschrift EP 1 592 895 B1 Gelenkspindeln zum Antrieb von Walzwerken beschrieben, die aus zwei Gelenkschäften, die mit einem Gleitstein verbunden sind, bestehen. Außerdem ist in der Druckschrift DE 300 83 75 A1 eine Gelenkwelle zur Übertragung von Drehbewegung bei gleichzeitiger Übertragung von Axialkräften beschrieben. Hierbei erfolgt die Kraftübertragung durch zwei topfförmig ausgebildete Gelenkschäfte, die in Kontakt mit einem kugelförmigen Zwischenstück stehen.

Darüberhinaus ist eine Ausführung unter der Bezeichnung Bogenzahnkupplung bekannt. Bei dieser greift ein mit einem Mehrzahnprofil versehenes Endstück einer Gelenkwellenseite in ein mit einem übereinstimmenden Mehrzahnprofil versehenes topfförmiges Endstück der zweiten Gelenkwellenseite ein. Aufgrund der geometrischen Ausführung sind bei dieser Konstruktion jedoch nur geringe Ausschlagwinkelbewegungen möglich.

Die Druckschrift DE 266 759 C beschreibt eine Kreuzgelenkkupplung mit zwei an jeweiligen Wellenenden befestigten, eine Kugel kreuzweise umfassenden Bügeln und an den Wellenenden vorgesehenen Stegen zur Übertragung des Drehmoments. Die Druckschrift zeigt, dass im Boden der in der Kugel angeordneten, sich kreuzenden Nuten für die Stege noch tiefer liegende Nuten von geringerer Breite für die Bügel, die zusätzlich vorgesehen sind, angeordnet sind.

Aus der Druckschrift US 1 836 095 A ist eine universell einsetzbare Gelenkverbindung mit Bügeln umfassenden Gabeln bekannt, die eine Kugel umschließen, in der mit kleineren Kugeln besetzte Rinnen vorgesehen sind, wobei die Gaben ebenfalls Rinnen aufweisen, die zur Aufnahme der Kugeln dienen.

Die Druckschrift GB 971 401 A beschreibt ein Kugelgelenk, bei dem paarige Arme an eine Kugel angreifen, wobei die Kugeln Rinnen aufweist, in denen die paarigen Arme eingreifen und die Rinnen nach oben hin eine Verdickung aufweisen, wobei diese Verdickung einen in eine jeweilige Rinne angebrachten Arm vor einem Verlassen der Rinne bewahren soll. Die Rinnen der Kugel können unterschiedliche Querschnitte haben.

Die Druckschrift US 2003/027641 A1 beschreibt eine Gelenkverbindung mit Hilfselementen, die in jeweiligen Rinnen einer Kugel beweglich gelagert sind und jeweilige Gelenkarme aufnehmen.

Es stellt sich somit die Aufgabe, insbesondere in Fortführung der vorstehend beschriebenen Kugelgelenke, ein Gelenk zur Übertragung von Drehbewegungen bzw. von Drehmomenten zu entwickeln, das bei einem gegebenen Außendurchmesser und großen möglichen Beugungswinkeln gesteigerte Drehmomente bzw. Drehzahlen ohne dauerhafte Beschädigungen übertragen kann.

Es wird ein Gelenk mit zwei Gelenkgabeln und einem Zwischenstück vorgestellt, bei dem die beiden Gelenkgabeln jeweils zwei sich gegenüberliegende Gelenkarme aufweisen, das Zwischenstück vier in einem Winkel zueinander angeordnete Einschnitte aufweist und die beiden Gelenkgabeln zueinander verdreht jeweils an gegenüberliegenden Seiten des Zwischenstücks mit den Gelenkgabeln in Einschnitte des Zwischenstücks eingreifen. Dabei ist vorgesehen, dass die Einschnitte jeweils einen Querschnitt aufweisen, der im wesentlichen einen Basisabschnitt und zwei sich gegenüberliegende Schenkelabschnitte umfasst, wobei die Schenkelabschnitte einen Verlauf mit veränderlicher Steigung haben, und dass die Querschnitte der Gelenkarme, die in Einschnitte des Zwischenstücks eingreifen, den Querschnitten dieser Einschnitte entsprechend ausgebildet sind. Dabei ist der Querschnitt der Einschnitte im wesentlichen parabelförmig ausgebildet.

Ein Verlauf veränderlicher Steigung bedeutet, dass der Verlauf nicht linear ist, sondern die Steigung des Verlaufs sich ändert, d.h. nicht konstant ist. Dies wird bspw. dadurch erreicht, dass der Verlauf gekrümmt ist oder dass der Verlauf der Schenkelanschnitte im Winkel zueinander stehende Linien umfasst.

In Ausgestaltung ist der Basisabschnitt des Querschnitts an gegenüberliegenden Enden im Bereich des Übergangs zu den Schenkelabschnitten jeweils gebogen ausgeführt.

Die Schenkelabschnitte können symmetrisch oder asymmetrisch zueinander ausgebildet sein.

Weiterhin können die Gelenkgabeln einstückig oder mehrteilig bzw. mehrstückig gebildet sein.

Die Gelenkgabeln und das Zwischenstück können aus unterschiedlichen Materialien gefertigt sein.

Es wird weiterhin eine Gelenkgabel für ein Gelenk, insbesondere für ein Gelenk der vorstehend beschriebenen Art, vorgestellt, das zwei sich gegenüberliegende Gelenkarme aufweist, die ein Gelenkarmpaar bilden. Die Gelenkarme weisen jeweils einen Querschnitt auf, der im wesentlichen einen Basisabschnitt und zwei sich gegenüberliegende Schenkelanschnitte umfasst, wobei die Schenkelabschnitte einen Verlauf mit veränderlicher Steigung haben. Diese veränderliche Steigung wird bspw. durch einen gekrümmten Verlauf oder durch im Winkel zueinander stehende Linien erreicht. Weiterhin ist der Querschnitt der Gelenkarme im wesentlichen parabelförmig ausgebildet.

Es wird weiterhin ein Zwischenstück für ein Gelenk, insbesondere für ein Gelenk der vorstehend beschriebenen Art, vorgestellt, das vier in einem Winkel zueinander angeordnete Einschnitte aufweist, wobei die Einschnitte jeweils einen Querschnitt aufweisen, der im wesentlichen einen Basisabschnitt und zwei sich gegenüberliegende Schenkelanschnitte umfasst, wobei die Schenkelabschnitte einen Verlauf mit veränderlicher Steigung haben. Diese veränderliche Steigung wird bspw. durch einen gekrümmten Verlauf oder durch im Winkel zueinander stehende Linien erreicht. Der Querschnitt der Einschnitte ist im wesentlichen parabelförmig ausgebildet.

Bei diesem Zwischenstück können die vier Einschnitte in Winkeln von 90 Grad zueinander angeordnet sein.

Mit dem vorgestellten Gelenk, zumindest in einigen der Ausführungen, wird die Möglichkeit zur Übertragung von größeren Drehmomenten im Sinne von maximal möglichen statischen Drehmomenten sowie von maximal möglichen Drehmomenten, die dynamisch, bspw. wechselnd oder schwellend, auftreten, deutlich gesteigert werden.

Durch die Steigerung der Übertragungsleistung stellt sich ggf. die Aufgabe, den Verschleiß, der bei der Drehbewegung der Gelenke auftritt, zu reduzieren.

So kann vorgesehen sein, dass die Gelenkgabeln und/oder das Zwischenstück in Kontaktbereichen zumindest abschnittsweise oberflächenbehandelt ist bzw. sind. Als Oberflächenbehandlung kann ein thermisches Beschichten verwendet werden. So kann bspw. die Gelenkgabel in Kontaktbereichen zumindest abschnittsweise mit Molybdän beschichtet sein.

Es wird somit ein Gelenk, das auch als Kugelgelenk bezeichnet werden kann, zur Übertragung von Drehbewegungen und Drehmomenten vorgestellt, bei dem die Eingangs- und Ausgangsbewegung auf einer Achse liegen bzw. in einem Winkel zueinander stehen können. In Kombination von zwei Gelenken und einer Welle ergibt sich die Anordnung einer Gelenkwelle, die ebenfalls zur Übertragung von Drehbewegungen und Drehmomenten eingesetzt wird, wobei die zu verbindenden Drehachsen in einem Winkel sowie räumlich versetzt zueinander stehen können.

Das Gelenk besteht aus zwei Gelenkschäften bzw. Gelenkgabeln und einem Zwischenstück. Die Gelenkgabeln bestehen regelmäßig aus einem Anschlussabschnitt, der mit dem angetriebenen oder anzutreibenden Bauteil verbunden wird, sowie einem gabelförmig ausgebildeten Armabschnitt, der im wesentlichen zwei Gelenkarme bzw. Gabelstücke, die ein Gelenkarmpaar bilden, umfasst, die dafür vorgesehen sind, in entsprechende Einschnitte des Zwischenstücks einzugreifen. Entsprechend dem vorgestellten Gelenk weisen die Gelenkarme in Ausgestaltung einen in der Ebene durch den Drehmittelpunkt der Gelenkgabel bei Beugungsstellung (Schnittpunkt der eine Kraft bzw. eine Drehbewegung übertragenden Eingangs- und Ausgangsachsen) senkrecht zur Drehachse der Gelenkgabel parabelförmigen Querschnitt auf. Beide Gelenkgabeln werden über das Zwischenstück verbunden, wobei die jeweiligen Gelenkarmpaare der Gelenkgabeln in einem Winkel von typischerweise 90 Grad zueinander verdreht in das Zwischenstück eingreifen.

Das Mittelstück, das vorzugsweise eine kugelförmige Hüllkurve aufweist, weist in Ausgestaltung vier zueinander im 90 Grad Winkel liegende Einschnitte bzw. Einstiche (Einformungen) auf, die ebenfalls einen parabelförmigen Querschnitt aufweisen. Die in Ausgestaltung parabelförmige Geometrie der Arme der Gelenkgabel stimmt mit der parabelförmigen Geometrie der Einschnitte bzw. Einkerbungen des Zwischenstücks geometrisch überein. Die jeweils zueinander positionierten, parabelförmigen Oberflächen der Gelenkarme und des Zwischenstücks stehen im Sinne von Kontaktflächen bzw. Gleitflächen zur Drehmomentübertragung in Kontakt.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Die Erfindung ist anhand von Ausführungsbeispielen in der Zeichnung dargestellt und wird im folgenden unter Bezugnahme auf die Zeichnung näher erläutert.
- Figuren 1a bis 1g: zeigen eine Ausführung eines beschriebenen Gelenks in unterschiedlichen Ansichten und Beugungswinkelstellungen.
- Figur 2: zeigt ein Zwischenstück nach dem Stand der Technik in einer perspektivischen Gesamtansicht.
- Figur 3: zeigt das Zwischenstück aus Figur 2 in einer Draufsicht.
- Figur 4: zeigt das Zwischenstück aus Figuren 2 und 3 in einer Seitenansicht.
- Figuren 5a bis 5c: zeigen ein Zwischenstück nach dem Stand der Technik in unterschiedlichen Ansichten.
- Figuren 6a bis 6d: zeigen eine Ausführung des erfindungsgemäßen Zwischenstücks in unterschiedlichen Ansichten.
- Figur 7: zeigt den Querschnittsverlauf eines Einschnitts in dem Zwischenstück aus Figur 6.
- Figur 8: zeigt eine mögliche Ausführung eines Querschnitts eines Einschnitts und eines entsprechenden Gelenkarms.
- Figur 9: zeigt eine weitere mögliche Ausführung eines Querschnitts eines Einschnitts und eines entsprechenden Gelenkarms.
- Figur 10: zeigt noch eine Ausführung eines Querschnitts eines Einschnitts und eines entsprechenden Gelenkarms.
- Figur 11: zeigt noch eine weitere Ausführung eines Querschnitts eines Einschnitts und eines entsprechenden Gelenkarms.
- Figur 12: zeigt eine Ausführung einer Gelenkgabel.
- Figur 13: zeigt eine weitere Ausführung einer Gelenkgabel.

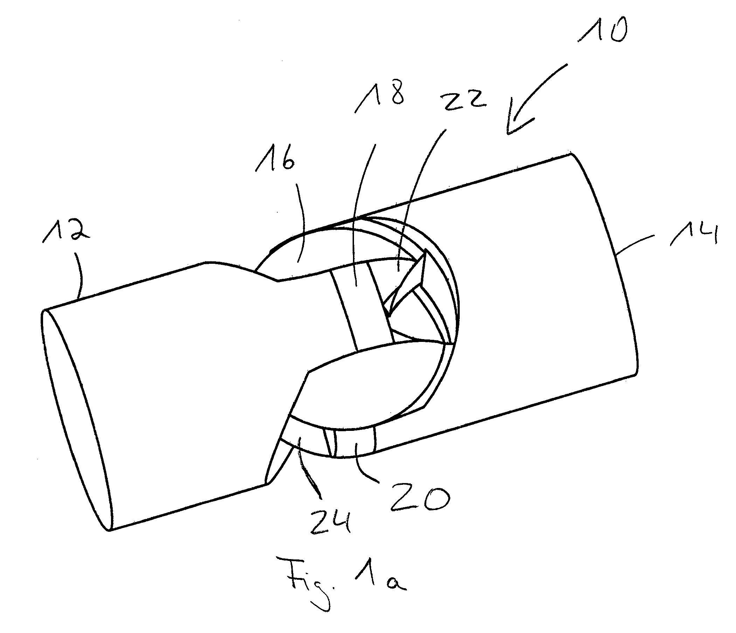

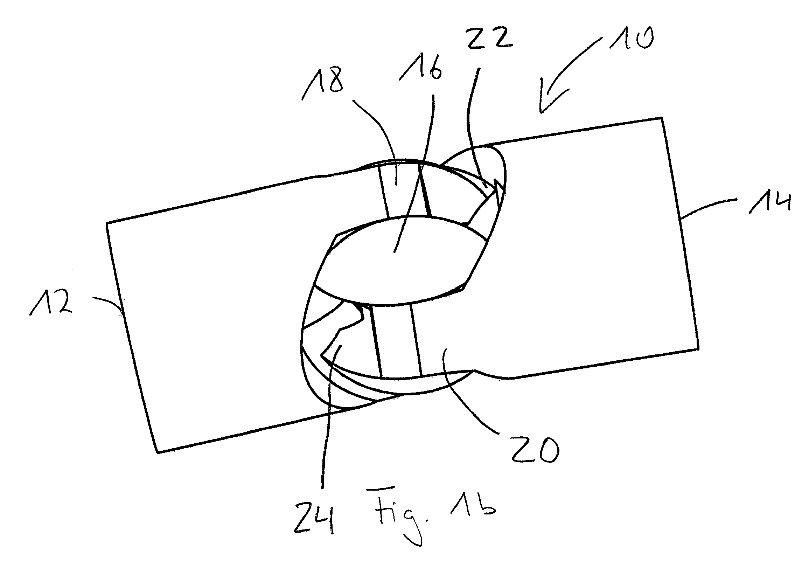

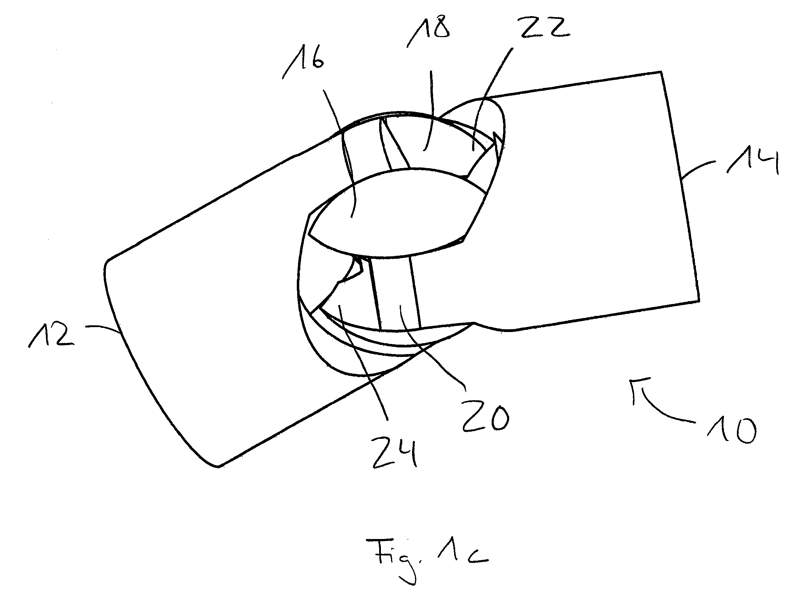

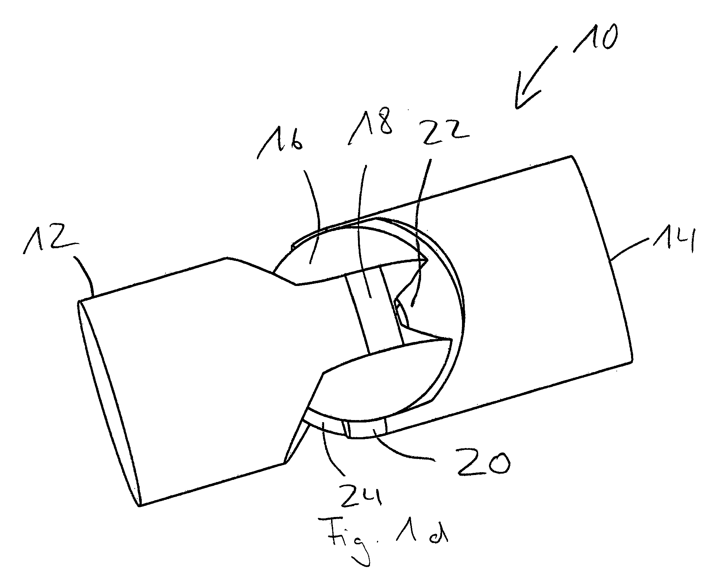

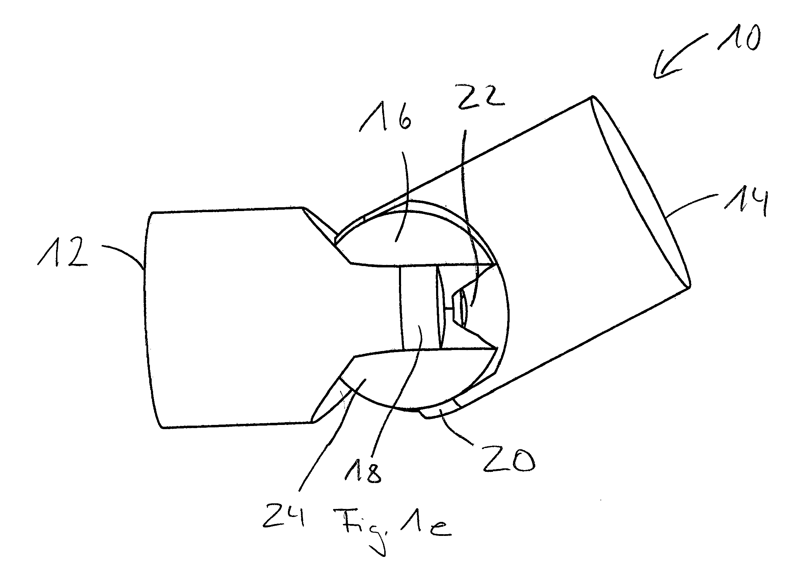

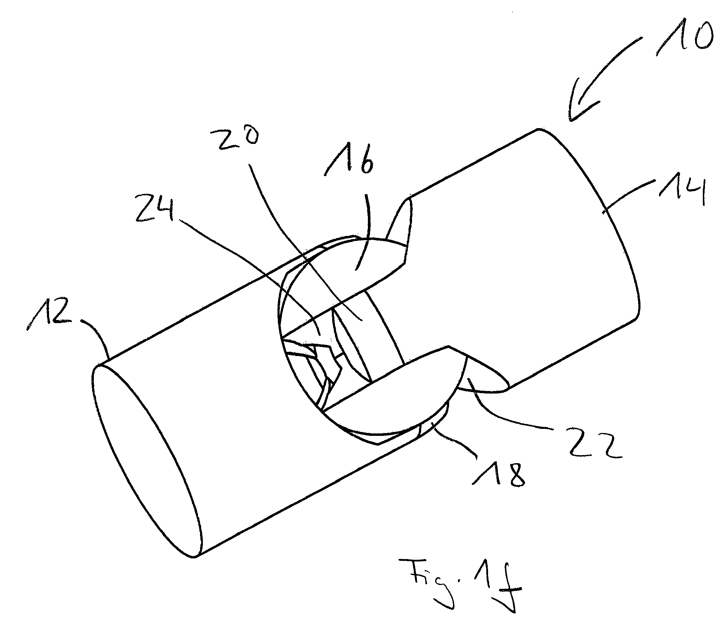

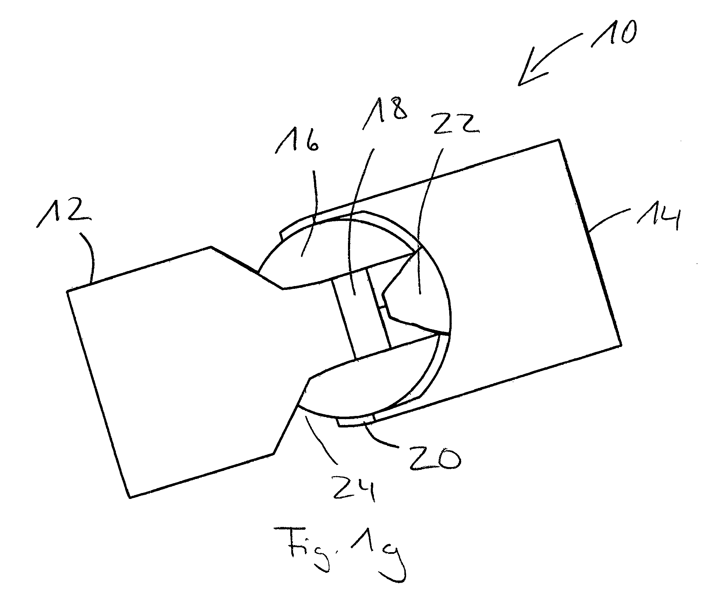

In Figuren 1a bis 1g sind eine Ausführung eines Gelenks, insgesamt mit der Bezugsziffer 10 versehen, in unterschiedlichen Ansichten und Beugungswinkelstellungen wiedergegeben. Die Darstellungen zeigen eine erste Gelenkgabel 12, eine zweite Gelenkgabel 14 und ein Zwischenstück 16. In der Darstellung ist ein Gelenkarm 18 der ersten Gelenkgabel 12 und ein weiterer Gelenkarm 20 der zweiten Gelenkgabel 14 zu erkennen. Diese beiden Gelenkarme 18 und 20 sind jeweils ein Gelenkarm eines Gelenkarmpaars.

Weiterhin zeigen die Figuren, teilweise abgedeckt, zwei Einschnitte 22 und 24 des Zwischenstücks 16. Insgesamt weist das Zwischenstück 16 vier Einschnitte auf, die um 90 Grad versetzt angeordnet sind. Die beiden Gelenkarme 18 und 20 greifen jeweils in einen der beiden Einschnitte 22 und 24 ein. Die jeweils anderen Gelenkarme der Gelenkarmpaare greifen in gegenüberliegende Einschnitte, die in dieser Darstellung nicht zu erkennen sind, ein. Somit greifen die Gelenkgabeln 12 und 14 um 90 Grad zueinander verdreht mittels ihrer Gelenkarme 18 und 20 in das Zwischenstück 16 bzw. in Einschnitte 22 und 24 des Zwischenstücks 16 ein.

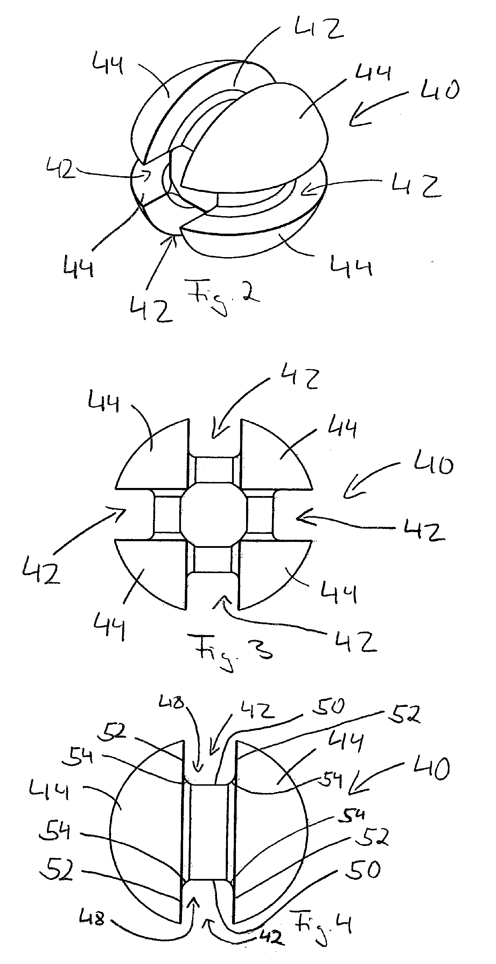

In Figur 2 ist in einer perspektivischen Gesamtansicht ein bekanntes Zwischenstück 40 dargestellt. Dieses Zwischenstück, das im wesentlichen kugelförmig ausgebildet ist, weist vier Einschnitte 42 auf, die jeweils um 90 Grad versetzt vorgesehen sind. Hierdurch werden vier linsenförmige Segmente 44 gebildet

In Figur 3 ist das Zwischenstück 40 aus Figur 2 in einer Draufsicht wiedergegeben, eine entsprechende Seitenansicht ist in Figur 4 gezeigt. In dieser Figur ist deutlich der Querschnitt bzw. Grundriss 48 der beiden Einschnitte 42 zu erkennen, der im wesentlichen einen Basisabschnitt 50 und zwei gegenüberliegende Schenkelabschnitte 52 umfasst, die gerade und parallel zueinander verlaufen. Übergangsbereiche 54 zwischen dem Basisabschnitt 50 und den jeweils zwei Schenkelabschnitten 52 sind abgerundet bzw. gebogen ausgeführt.

Der Querschnitt 48 zeigt den Verlauf bzw. die Ausformung einer Kontaktfläche der Einschnitte 42, d.h. die Kontaktbereiche bzw. -zonen, die bei einem zusammengebauten Gelenk in Kontakt mit den entsprechend ausgebildeten Gelenkarmen der zugeordneten Gelenkgabeln stehen.

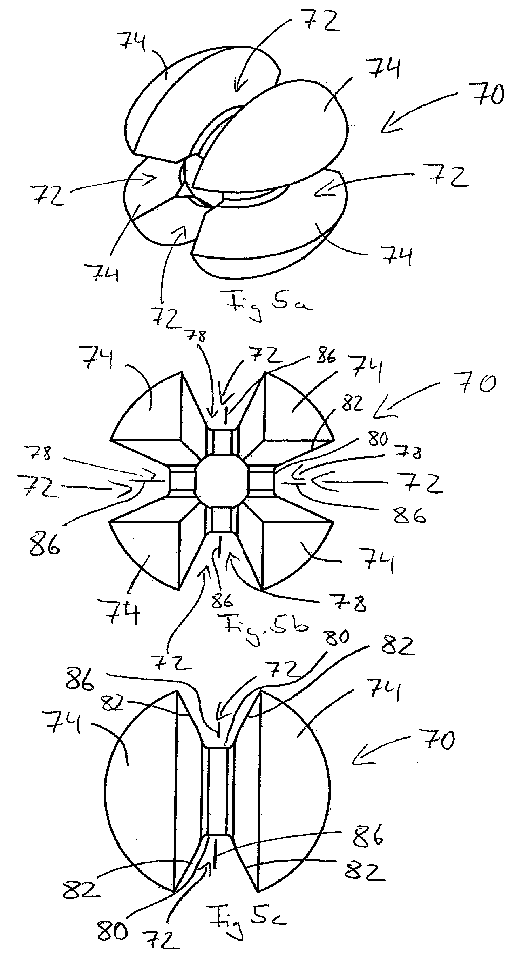

In Figuren 5a bis 5c ist eine weitere bekannte Ausführung eines Zwischenstücks 70 dargestellt mit Einschnitten 72 und Segmenten 74. Dabei zeigt Figur 5a eine perspektivische Ansicht, Figur 5b eine Draufsicht und Figur 5c eine Seitenansicht. Die Einschnitte 72 weisen jeweils einen Querschnitt 78 auf mit einem Basisabschnitt 80 und zwei gegenüberliegenden Schenkelabschnitten 82, wobei die Schenkelabschnitte 82 wiederum geradlinig, allerdings nicht parallel zueinander verlaufen, sondern symmetrisch zu einer Mittelachse 86 voneinander weglaufen. Ein entsprechender Gelenkarm weist somit einen trapezförmigen Querschnitt auf.

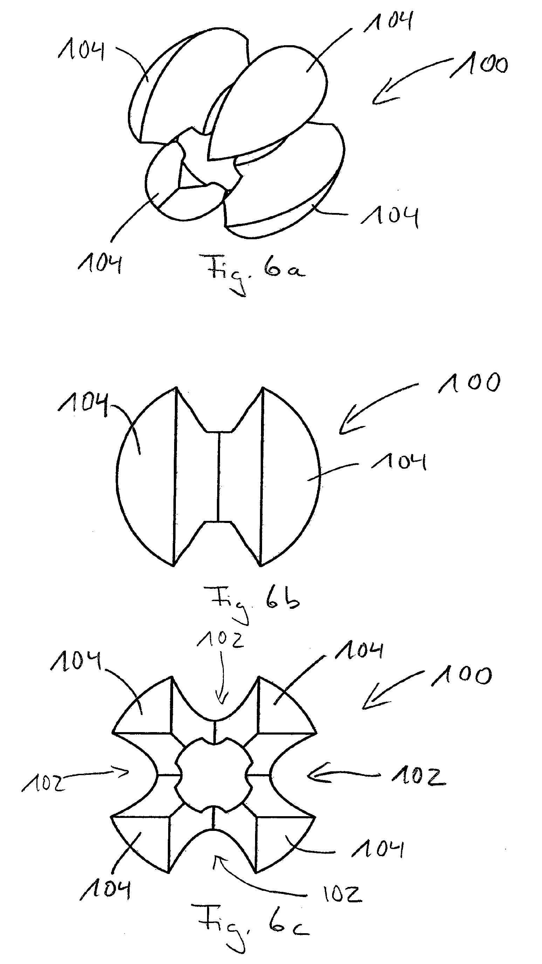

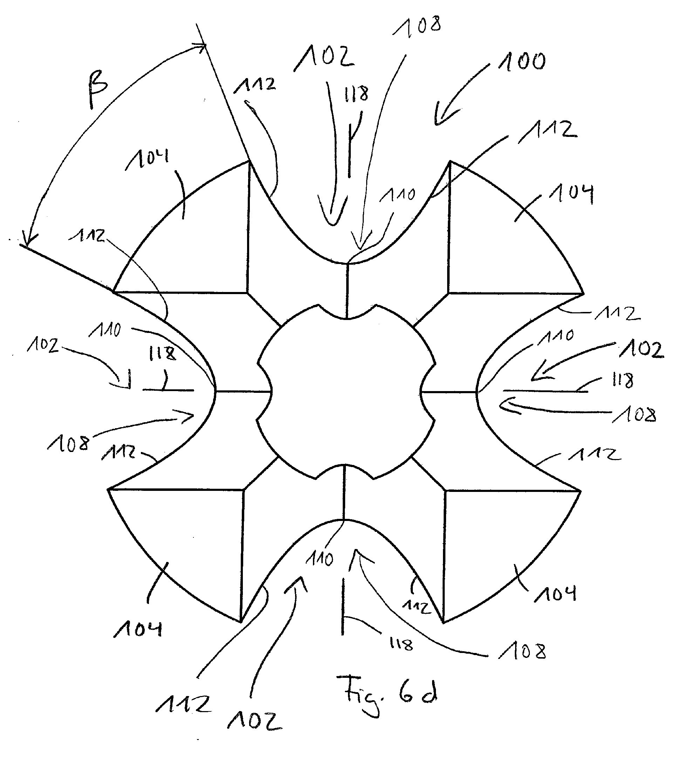

In Figuren 6a bis 6d ist eine Ausführung eines erfindungsgemäßen Zwischenstücks, insgesamt mit der Bezugsziffer 100 versehen, in unterschiedlichen Ansichten wiedergegeben. So zeigt Figur 6a das Zwischenstück 100 in einer perspektivischen Ansicht, Figur 6b in einer Seitenansicht, Figur 6c in einer Draufsicht und Figur 6d in einer vergrößerten Draufsicht. Dieses Zwischenstück 100 weist vier Einschnitte 102 auf, zwischen denen vier linsenförmige Segmente 104 ausgebildet sind. Diese Segmente 104 sind jeweils um 90 Grad zueinander verdreht bzw. verschoben angeordnet. Ein Winkel β ist in Figur 6d angezeigt.

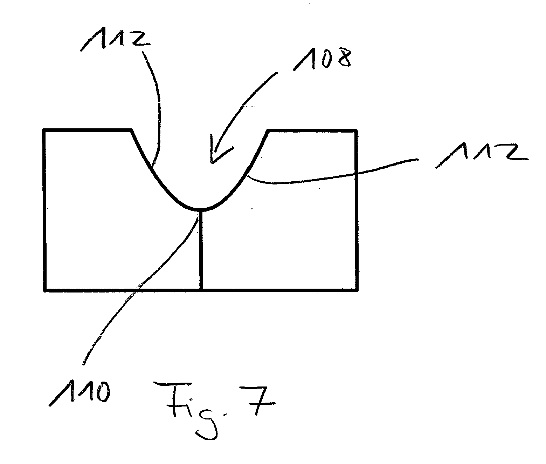

Die Einschnitte 102 weisen einen Querschnitt bzw. Grundriss (Kontur) 108 auf, die jeweils einen Basisabschnitt 110 und zwei gegenüberliegende, symmetrisch zu einer Mittelachse 118 verlaufende Schenkelabschnitte 112 aufweisen . Dieser Querschnitt 108 ist in Figur 7 zur Verdeutlichung vereinfacht dargestellt.

Figur 7 zeigt den Verlauf 108 mit einem Basisabschnitt 110 und zwei Schenkelabschnitten 112. Dabei ist der Querschnitt 108 wie eine Parabel bzw. parabelförmig ausgebildet, d.h. der Basisabschnitt 110 ist im wesentlichen durch den Scheitelpunkt der Parabel gebildet und die Schenkelabschnitte 112 sind durch Äste der Parabel gegeben.

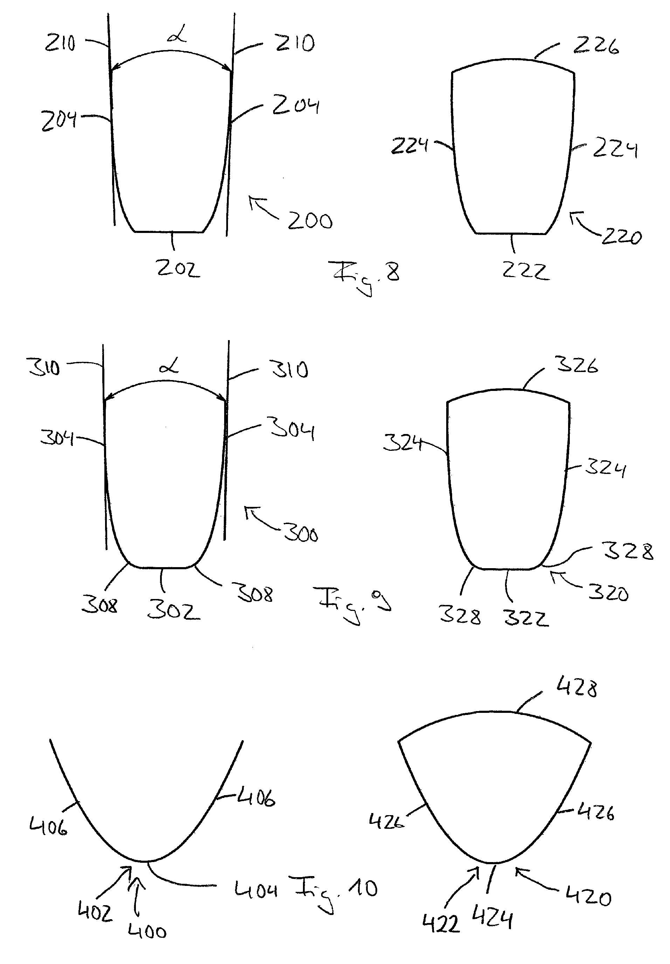

Einen möglichen Verlauf bzw. eine Kontur eines Querschnitts 200 eines Einschnitts und ein entsprechender Verlauf eines Querschnitts 220 eines Gelenkarms sind in Figur 8 dargestellt. Die Figur zeigt den Querschnitt 200 mit einem geraden Basisabschnitt 202 und zwei gebogenen bzw. gekrümmten Schenkelabschnitten 204, die symmetrisch zueinander verlaufen. Weiterhin ist in der Darstellung ein Austrittswinkel α angezeigt, wozu Asymptoten 210 angelegt sind.

Entsprechend weist der Querschnitt 220 einen Basisabschnitt 222 und zwei Schenkelabschnitte 224 und einen gebogenen Deckabschnitt 226, der dem Basisabschnitt gegenüberliegt, auf. Der Querschnitt 220 ist somit viereckig ausgebildet mit einem geraden Abschnitt, nämlich dem Basisabschnitt 222, und dem Deckabschnitt 226, dessen Krümmung der Krümmung des Umfangs der Gelenkgabel entspricht, und zwei gebogen bzw. gekrümmt ausgebildeten Abschnitten, nämlich den beiden Schenkelabschnitten 224. Diese sind nach außen gebogen, d.h. diese verlaufen im wesentlichen konkav.

In Figur 9 ist eine weitere mögliche Ausführung gezeigt, nämlich ein Querschnitt 300 eines Einschnitts und ein Querschnitt 320 eines Gelenkarms, der dafür vorgesehen ist in den entsprechenden und zugeordneten Einschnitt einzugreifen.

Der Querschnitt 300 umfasst einen Basisabschnitt 302 und zwei gekrümmt verlaufende Schenkelabschnitte 304. Allerdings sind bei dieser Ausführung zwischen Enden des Basisabschnitts 302 und der beiden Schenkelabschnitte 304 Übergangsbereiche 308 vorgesehen, so dass die Übergänge zwischen dem Basisabschnitt 302 und den beiden Schenkelabschnitten 304 ohne Knick, der bspw. in Figur 8 gezeigt ist, ausgebildet sind. Wiederum sind zur Verdeutlichung des Winkels α Asymptoten 310 angelegt.

Entsprechend weist der Querschnitt 320 des zugeordneten Gelenkarms einen Basisabschnitt 322, zwei Schenkelabschnitte 324, einen Deckabschnitt 326 und gebogene Übergangsbereiche 328 auf. Auch die Übergänge zwischen den beiden Schenkelabschnitten 324 und dem Deckabschnitt 326 können gebogen ausgebildet sein.

In Figur 10 ist noch eine weitere Ausführung verdeutlicht. Wiederum ist ein Querschnitt 400 eines Einschnitts und ein entsprechender Querschnitt 420 des zugeordneten Gelenkarms dargestellt. Der Querschnitt 400 ist als Parabel 402 mit einem Scheitelpunkt 404 und zwei Ästen 406 ausgebildet.

Der entsprechende Querschnitt 420 des zugeordneten Gelenkarms ist als Parabelstumpf 422 mit einem Scheitelpunkt 424 und zwei symmetrisch zueinander verlaufenden Ästen 426 ausgeführt. Wiederum ist ein Deckabschnitt 428 vorgesehen.

Bei dem Querschnitt 400 ist der Basisabschnitt im wesentlichen durch den Scheitelpunkt 404 der Parabel 402 gegeben. Der Übergang zwischen diesem Basisabschnitt und den beiden Ästen 406 als Schenkelabschnitte ist "fließend". Ausgehend von Figur 9 erhält man durch stärkeres Ausprägen der Biegungen der Übergangsbereiche 308 bzw. durch weiteres Ausdehnen dieser Übergangsbereiche 308 die in Figur 10 dargestellte Parabel 402. Wichtig ist die gekrümmte bzw. gebogene Ausführung der Schenkelabschnitte 304 (Figur 9) bzw. der Äste 406 (Figur 10).

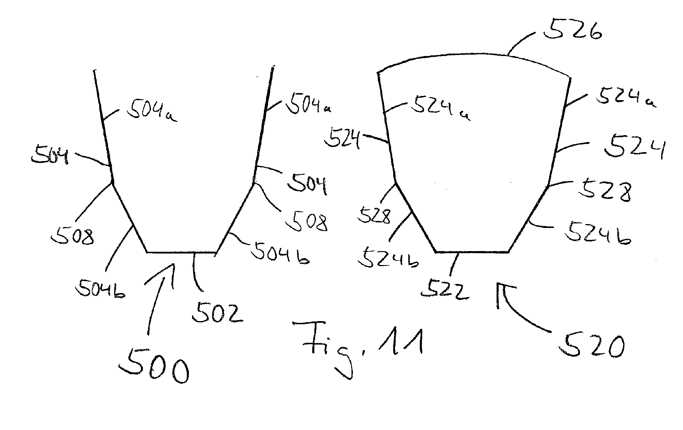

Figur 11 zeigt eine weitere Ausführung, nämlich einen Querschnitt 500 eines Einschnitts und einen entsprechenden Querschnitt 520 eines Gelenkarms. Der Querschnitt 500 weist einen Basisabschnitt 502 und Schenkelabschnitte 504 auf, die aus über Winkel 508 zueinander stehenden Linien 504a und 504b zusammengesetzt sind. Entsprechend weist der Querschnitt 520 einen Basisabschnitt 522 und zwei Schenkelabschnitte 524 auf, die wiederum jeweils zwei Linien 524a und 524b, die im Winkel 528 zueinander angeordnet sind, umfassen. Wiederum ist ein Deckabschnitt 526 vorgesehen.

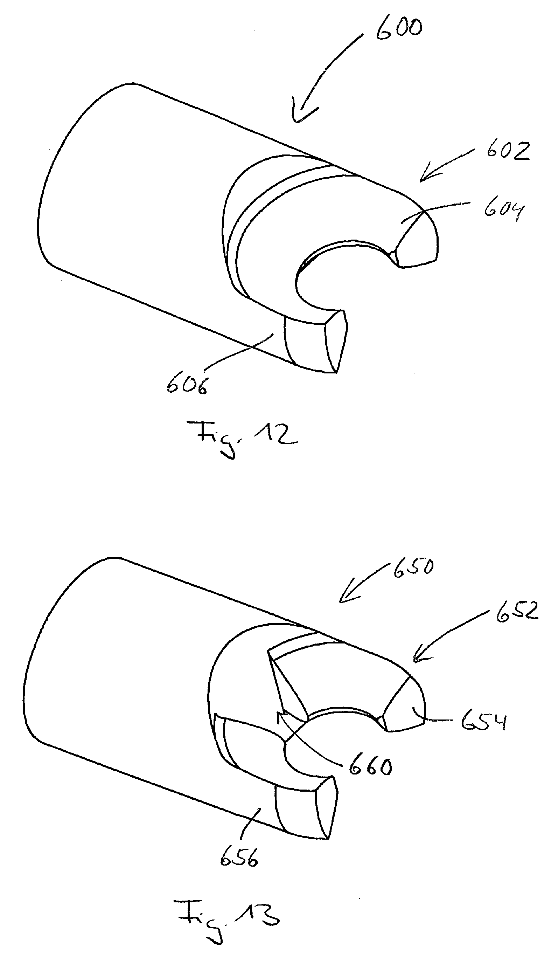

Figur 12 zeigt eine Gelenkgabel 600 mit einem Gelnkarmpaar 602, nämlich einen ersten Gelenkarm 604 und einen zweiten Gelenkarm 606, die einander gegenüberstehen und einen parabelförmigen Querschnitt aufweisen.

Figur 13 zeigt eine weitere Gelenkgabel 650 mit einem Gelenkarmpaar 652, das einen ersten Gelenkarm 654 und einen zweiten Gelenkarm 656 aufweist. Weiterhin zeigt die Darstellung einen Durchtritt 660, der zur Montage eines Zwischenstücks mit der Gelenkgabel 650 und der Gelenkgabel 600 dient.

Das vorgestellte Gelenk besteht somit aus zwei Gelenkgabeln und einem Zwischenstück. Die Gelenkgabeln bestehen aus einem Anschlussabschnitt, der zur Anbindung an einen Gegenpartner entsprechend ausgeformt sein kann, sowie einem gegenüberliegenden fest verbundenen gabelförmigen Armabschnitt, der zwei gegenüberliegende Gelenkarme aufweist. In einer Ausführungsform weisen die Gelenkgabeln einen zylindrischen Außendurchmesser auf. Insofern weisen die Außenflächen der Gelenkarme eine zylindrische Hüllkurve auf.

Die innenliegende Kontur der Gelenkarme kann eine parabelförmige Oberfläche aufweisen . Diese läuft von dem Ende eines Gelenkarms in einer kreisförmigen Ausgestaltung zu dem Ende des anderen Gelenkarms. Insofern weist der Querschnitt eines Gelenkarms einen Querschnitt auf, der nach außen die zylinderförmige Hüllkurve der Gelenkgabeln und nach innen den beschriebenen parabelförmigen Querschnitt aufweist. Diese parabelförmige Oberflächenkontur läuft, wie vorstehend beschrieben ist, vom Ende des einen Gelenkarms kreisförmig zu dem Ende des zweiten Gelenkarms der Gelenkgabel.

In einer weiteren Ausführungsform ragen die Gelenkarme über die Ebene des Mittelpunkts dieses Kreisbogens, der den Schnittpunkt der kraftübertragenen Eingangs- und Ausgangsachsen darstellt, in entgegengesetzter Richtung des Anschlussabschnitts des Gelenkarms heraus. In diesem Sinne ist der innere Abstand der Gelenkarme am Gelenkarmende geringer als der innere Abstand der Gelenkarme im Bereich des Kreismittelpunkts. In einer weiteren Ausgestaltung der Gelenke können die Längen der Gelenkarme variieren und nur bis zur Ebene des Kreismittelpunkts reichen oder kürzer gestaltet sein, so dass die Ebene des Kreismittelpunkts nicht erreicht wird. Das Zwischenstück, das in Ausgestaltung eine kugelige Hüllkurve aufweist, weist vier Einschnitte auf, die 90 Grad zueinander stehend über das Zwischenstück verteilt angeordnet sind.

Die Einschnitte stoßen jeweils in zwei Kreuzungspunkten aneinander. Die Oberflächenkontur der Einschnitte weist die gleiche parabelförmige Oberflächenkontur wie die innere Ausgestaltung der Gelenkarme auf. Die Gelenkarme der Gelenkgabel greifen somit formschlüssig in die Einschnitte des Zwischenstücks ein. In einer weiteren Ausführungsform stehen somit die parabelförmige Oberfläche der Gelenkschaftarme sowie die parabelförmige Oberfläche der Einschnitte des Zwischenstücks über den vollständigen parabelförmigen Querschnitt in Kontakt.

In einer weiteren Ausführungsform sind an dem Kontakt (Gleitflächen) auch Ausnehmungen im Sinne von Schmiernuten oder Schmiertaschen möglich. Insofern müssen die genannten parabelförmigen Oberflächen der Gelenkarme und der Zwischenstückeinschnitte nicht durchgehend bzw. umlaufend in Kontakt stehen. Das Zwischenstück weist somit in der beschriebenen Ausführungsform einen sternartigen Querschnitt auf. In der räumlichen Ausgestaltung weist das Zwischenstück auf der kugelförmigen Hüllkurve vier linsenartige Segmente auf, die durch die parabelförmigen Einschnitte getrennt sind. An den Kreuzungspunkten der Einschnitte ist in einer Ausführungsform jeweils eine Abflachung vorgesehen. Der Abstand der Abflachungen zueinander ist geringförmig geringer wie der innere Abstand der Gelenkarmenden.

Durch diese Ausgestaltung kann das Zwischenstück in den Gelenkarm eingeführt werden, in dem Sinne, dass die Gelenkarme in die umlaufenden Einschnitte des Zwischenstücks eingreifen. Bei der Montage wird nach dem Einsetzen des Zwischenstücks in eine Gelenkgabel das Zwischenstück um 90 Grad gedreht und die zweite Gelenkgabel wird in einem Winkel von 90 Grad stehend zur ersten Gelenkgabel ebenfalls in den zweiten umlaufenden Einschnitt eingeführt. Um dies zu ermöglichen, ist in der beschriebenen Ausführungsform bei der ersten beschriebenen Gelenkgabel gegenüber dem Austritt der Gelenkarme eine Ausnehmung in dem parabelförmigen Querschnitt vorgesehen. In dieser Ausnehmung greift bei der Montage der zweiten Gelenkgabel auf das Zwischenstück ein Gelenkarm der zweiten Gelenkgabel ein.

In weiteren Ausgestaltungen ist es möglich, die entsprechenden Gelenkarme zu kürzen, damit bei der Montage die Ausnehmung nicht erforderlich ist oder ein Durchbruch nicht vollständig nötig ist. In weiteren Ausführungsformen können die Komponenten bzw. Bauteile des Gelenks auch dergestalt ausgebildet sein, dass bei der Montage die Gelenkarme nicht in einem Winkel von 90 Grad zueinander stehen, sondern in einem größeren Winkel, damit die genannte Ausnehmung nicht erforderlich ist. In weiteren Ausgestaltungsformen ist es denkbar, die Gelenkarme derart zu kürzen, dass ein Umgreifen der Gelenkarme um den inneren Durchmesser der Einschnitte des Zwischenstücks nicht mehr auftritt und somit die Gelenkgabeln in einer Achse liegend auf das Zwischenstück geschoben werden können. In dieser Ausgestaltungsform ist eine Übertragung von Zugkräften jedoch nicht mehr möglich.

In weiteren Ausführungsformen können die inneren Konturen der Querschnitte der Gelenkarme sowie die Querschnittskonturen der Einschnitte des Zwischenstücks abweichend vom Stand der Technik mit rechteckigen oder trapezförmigen Querschnitten sowie abweichend von der beschriebenen bevorzugten Ausführungsform mit parabelförmigen Querschnitten auch weitere Querschnittsformen, wie bspw. kreissegmentförmige Querschnitte oder bogensegmentförmigen Querschnitte sowie Querschnitte, die im Winkel zueinander stehende Linien umfassen, ausgebildet sein. Auch muss der Querschnitt der Gelenkarme nicht spiegelbildlich symmetrisch gestaltet sein, d.h. die sich gegenüberstehenden inneren Konturen der Gelenkarme, die im Kontakt zu dem Zwischenstück stehen, müssen nicht spiegelbildlich symmetrisch zueinander gestaltet sein.

In weiteren Ausführungsformen können die Gelenkgabeln auch mehrteilig ausgeführt werden, wobei die Gelenkgabeln bei der Montage durch geeignete Verbindungselemente miteinander befestigt werden.

Als Materialien für die Gelenke kommen Eisenmetalle und deren Legierungen, Nichteisenmetalle und deren Legierungen, Edelstähle, korrosionsbeständige Stähle, Keramiken, Kunststoffe, Verbundwerkstoffe und alle Kombinationen und Werkstoffverbunde der genannten Werkstoffe in frage. Weiterhin ist es möglich, bei einem Gelenk die Gelenkarme sowie das Zwischenstück aus jeweils verschiedenen Materialien zu fertigen. In weiteren Ausführungsformen ist es denkbar, z.B. im Hinblick auf den Korrosionsschutz oder die Optimierung der tribologischen Verhältnisse, in den Kontaktzonen bzw. - bereichen zwischen den Gelenkarmen der Gelenkgabeln und dem Zwischenstück einzelne Bauteile oder Bauteilsegmente zu härten oder mit Oberflächenbeschichtungen zu versehen. Dies kann auch abschnittsweise erfolgen.

Neben den bekannten Härteverfahren für metallische Werkstoffe durch Energieeintrag und anschließendem Abkühlen z.B. Einsatzhärten, Induktionshärten sowie Härten mit Laser, ist auch eine Oberflächenhärtung durch Nitrier-oder Carbonitrierverfahren möglich. Weiterhin sind Oberflächenbeschichtungsverfahren durch Plasmabeschichtung, z.B. Kohlenstoffschichten, DLC, Plasmanitrieren, sowie galvanische Schichtsysteme, die mit Strom oder stromlos aufgetragen werden können, sowie Lacksysteme oder Gleitlacksysteme, die anschließend luftgetrocknet oder mit Wärme eingebrannt werden, sowie durch verschiedene Tauch- oder Spritzverfahren aufgebracht werden können, denkbar.

In bevorzugter Ausführungsform sind ebenfalls Schichtsysteme, die durch die Verfahren des thermischen Spritzens aufgebracht werden, denkbar. In der Praxis zeigen sich zur Optimierung der tribologischen Verhältnisse in der Kontaktzone zwischen Gelenkarmen und Zwischenstück Gleitschichten aus Molybdän, die mit den Verfahren des thermischen Spritzens aufgebracht werden, als vorteilhaft.

Das vorgestellte Gelenk sowie die beschriebene Gelenkgabel und das Zwischenstück weisen, zumindest in einigen der Ausführungen, erhebliche Vorteile auf.

Als Vorteile der beschriebenen Ausführungsform mit parabelförmigen Konturen an den Gelenkschaftarmen und parabelförmigen Einschnitten an dem Zwischenstück ergeben sich im Vergleich zum Stand der Technik folgende Aspekte. Durch die vorteilhafte Ausgestaltung der neuen Konstruktion können bei gegebener Gelenkgröße, d.h. gegebenen Außendurchmesser der Gelenkgabeln, größere Drehmomente übertragen werden. Bei Torsion tritt die größte Spannung im Außenbereich der zylindrischen Gelenkgabeln nach dem Stand der Technik auf. Durch die neue Gestaltung wird nunmehr eine Verdickung der Gelenkarme in dem äußeren Durchmesserbereich erreicht. Weiterhin ist durch die dargestellte Ausgestaltung der Armquerschnitte das Widerstandsmoment gegen Biegung im Vergleich zum Stand der Technik erhöht.

Weiterhin kann durch die beschriebene Ausführung der parabelförmigen Innenkontur der Gelenkarme der Austrittswinkel α der Parabeloberflächen eines Gelenkarms zueinander an dem Schnittpunkt zur äußeren Zylinderoberfläche der Gelenkgabel sehr klein gehalten werden. Da die Krafteinleitung bei der Übertragung eines Torsionsmoments hauptsächlich in dem äußeren Durchmesserbereich der Kontaktzone zwischen den Gelenkarmen und dem Zwischenstück stattfindet, kann dadurch ein Aufbiegen der Gelenkarme im Vergleich zu Gelenkkonstruktionen mit trapezförmigen Querschnitten und gleichgroßer Möglichkeit zur Drehmomentübertragung reduziert werden.

Weiterhin ist im Vergleich zu Gelenkkonstruktionen mit trapezförmigen Querschnitten der Gelenkarme, die eine vergleichbare Momentenübertragung ermöglichen, der Winkel ß der Flächen der Einschnitte des Zwischenstücks, die ein linsenförmiges Segment begrenzen, am Austrittspunkt zur kugelförmigen Hüllfläche deutlich kleiner als bei vorstehend genannter Ausführungsform mit trapezförmigen Querschnitten. Somit tritt bei Drehmomentbelastung eine deutlich geringere resultierende Radialkraft auf ein Winkelsegment bzw. ein linsenförmiges Segment des Zwischenstücks auf. Dadurch ist die Bruchgefahr bei dem Zwischenstück, insbesondere bei dessen Segmenten, deutlich reduziert.

Durch den parabelförmigen Querschnitt der Zwischenstückeinschnitte in einigen der Ausführungsformen weist der Einschnittgrund im Vergleich zum Stand der Technik keine scharfen Kanten bzw. keine Knicke, sondern eine spannungstechnisch optimierte Verrundung auf. Dadurch ist es möglich, die Einschnittiefe im Vergleich zum Stand der Technik bei vergleichbarer Drehmomentenübertragung zu erhöhen. Somit ist es möglich den Querschnitt der Gelenkarme zusätzlich zu vergrößern.

Bei dem Stand der Technik ist die Tiefe des Einschnitts und die Breite des Einschnitts im Einschnittgrund der Zwischenstücke auf ein größtes Maß begrenzt, da sonst das Zwischenstück zu stark geschwächt wird und die linsenförmigen Segmente ausbrechen können. Soll aber der Querschnitt der Gelenkarme im Sinne einer größeren Drehmomentübertragung vergrößert werden, kann nur der Einschnitt am Austrittsbereich und somit die Gelenkarme im zylindrischen Außenbereich der Gelenkgabeln verbreitert werden. Dadurch vergrößert sich der Winkel β der zueinanderstehenden Kontaktflächen des trapezförmigen Einschnitts an dem Zwischenstück.

Durch die größere Schrägstellung der Kontaktflächen ergibt sich bei dem Stand der Technik der Nachteil, dass bei Drehmomentübertragung die Arme der Gelenkgabel radial nach außen gebogen werden. Durch die vorteilhafte Ausgestaltung des erfinderischen Gelenks kann im Vergleich zum Stand der Technik bei einem Gelenk mit vergleichbarer Drehmomentübertragung somit die Breite des Gelenkarms im zylindrischen Außenbereich reduziert werden, was die zur Montage erforderliche Ausnehmung in einem Schaft schmäler ausfallen lässt und somit die Stabilität des Schafts erhöht.

Durch die vorteilhafte Ausgestaltung der parabelförmigen Kontaktflächen zwischen Gelenkgabel und Zwischenstück findet bei Drehmomentübertragung eine Selbstzentrierung der Gelenkgabeln zum Zwischenstück statt. Dadurch ist ein vibrationsärmerer Lauf der Gelenke ermöglicht. Die Gelenke können dann auch bei höheren Drehzahlen eingesetzt werden. Ein weiterer Vorteil gegenüber dem Stand der Technik besteht in der Vergrößerung der Kontaktfläche der Gelenkarme zum Zwischenstück. Dadurch kann die Flächenpressung bei vergleichbarer Drehmomentübertragung reduziert werden. Dies kann den Verschleiß in der Kontaktzone reduzieren.

## Patentansprüche

1. Gelenk mit zwei Gelenkgabeln (12, 14) und einem Zwischenstück (16, 100), bei dem
die beiden Gelenkgabeln (12, 14) jeweils zwei sich gegenüberliegende Gelenkarme (18, 20) aufweisen,
das Zwischenstück (16, 100) vier in einem Winkel zueinander angeordnete Einschnitte (22, 24, 102) aufweist,
die beiden Gelenkgabeln (12, 14) zueinander verdreht jeweils an gegenüberliegenden Seiten des Zwischenstücks (16, 100) mit den Gelenkarmen (18, 20) in Einschnitte (22, 24, 102) des Zwischenstücks (16, 100) eingreifen, wobei
die Einschnitte (22, 24, 102) jeweils einen Querschnitt aufweisen, der im wesentlichen einen Basisabschnitt (110, 202, 222, 302, 322) und zwei sich gegenüberliegende Schenkelanschnitte (112, 204, 224, 304, 324) umfasst, wobei die Schenkelabschnitte (112, 204, 224, 304, 324) einen Verlauf mit veränderlicher Steigung haben, und wobei
die Gelenkarme (18, 20), die in Einschnitte (22, 24, 102) des Zwischenstücks (16, 100) eingreifen, den Querschnitten dieser Einschnitte (22, 24, 102) entsprechend ausgebildet sind
**dadurch gekennzeichnet, dass**
der Querschnitt der Einschnitte (22, 24, 102) im wesentlichen parabelförmig ausgebildet ist.

2. Gelenk nach Anspruch 1, bei dem die Schenkelabschnitte (112, 204, 224, 304, 324) einen gekrümmten Verlauf haben.

3. Gelenk nach Anspruch 1, bei dem die Schenkelabschnitte (112, 204, 224, 304, 324) im Winkel zueinander stehende Linien umfassen.

4. Gelenk nach einem der Ansprüche 1 bis 3, bei dem der Basisabschnitt (110, 202, 222, 302, 322) des Querschnitts an gegenüberliegenden Enden im Bereich des Übergangs zu den Schenkelabschnitten (112, 204, 224, 304, 324) jeweils gebogen ausgeführt ist.

5. Gelenk nach einem der Ansprüche 1 bis 4, bei dem die Schenkelabschnitte (112, 204, 224, 304, 324) symmetrisch zueinander ausgebildet sind.

6. Gelenk nach einem der Ansprüche 1 bis 4, bei dem die Schenkelabschnitte (112, 204, 224, 304, 324) asymmetrisch zueinander ausgebildet sind.

7. Gelenk nach einem der Ansprüche 1 bis 6, bei dem die Gelenkgabeln (12, 14) einstückig ausgebildet sind.

8. Gelenk nach einem der Ansprüche 1 bis 6, bei dem die Gelenkgabeln (12, 14) mehrteilig ausgebildet sind.

9. Gelenk nach einem der Ansprüche 1 bis 8, bei dem die Gelenkgabeln (12, 14) und das Zwischenstück (16, 100) aus unterschiedlichen Materialien gefertigt sind.

10. Gelenk nach einem der Ansprüche 1 bis 9, bei dem die Gelenkgabeln (12, 14) und/oder das Zwischenstück (16, 100) in Kontaktbereichen zumindest abschnittsweise oberflächenbehandelt ist bzw. sind.

11. Gelenk nach Anspruch 10, bei dem als Oberflächenbehandlung ein thermisches Beschichten verwendet ist.

12. Gelenkgabel für ein Gelenk (10), insbesondere für ein Gelenk (10) nach einem der Ansprüche 1 bis 11, die jeweils zwei sich gegenüberliegende Gelenkarme (18, 20) aufweist, die jeweils einen Querschnitt aufweisen, der im wesentlichen einen Basisabschnitt (110, 202, 222, 302, 322) und zwei sich gegenüberliegende Schenkelabschnitte (112, 204, 224, 304, 324) umfasst, wobei die Schenkelabschnitte (112, 204, 224, 304, 324) einen Verlauf mit veränderlicher Steigung haben**dadurch gekennzeichnet**, dassder Querschnitt der Gelenkarme (18, 20) im wesentlichen parabelförmig ausgebildet ist.

13. Gelenkgabel nach Anspruch 12, die in Kontaktbereichen zumindest abschnittsweise mit Molybdän beschichtet ist.

14. Zwischenstück für ein Gelenk (10), insbesondere für ein Gelenk (10) nach einem der Ansprüche 1 bis 11, das vier in einem Winkel zueinander angeordnete Einschnitte (22, 24, 102) aufweist, wobei die Einschnitte (22, 24, 102) jeweils einen Querschnitt aufweisen, der im wesentlichen einen Basisabschnitt (110, 202, 222, 302, 322) und zwei sich gegenüberliegende Schenkelabschnitte (112, 204, 224, 304, 324) umfasst, wobei die Schenkelabschnitte (112, 204, 224, 304, 324) einen Verlauf mit veränderlicher Steigung haben,
**dadurch gekennzeichnet, dass**
der Querschnitt der Einschnitte (22, 24, 102) im wesentlichen parabelförmig ausgebildet ist.

15. Zwischenstück nach Anspruch 14, bei dem die vier Einschnitte (22, 24, 102) in Winkeln von 90 Grad zueinander angeordnet sind.

## Claims

1. A joint having two joint yokes (12, 14) and an intermediate portion (16, 100), in which
both said joint yokes (12, 14) each comprise two opposing joint arms (18, 20),
said intermediate portion (16, 100) comprises four recesses (22, 24, 102) arranged with an angle between them,
both said joint yokes (12, 14) which are twisted to each other on opposing sides of said intermediate portion (16, 100), respectively, engage by means of said joint arms (18, 20) with said recesses (22, 24, 102) of said intermediate portion (16, 100), wherein
said recesses (22, 24, 102) each have a cross-section comprising substantially a base portion (110, 202, 222, 302, 322) and two opposing leg portions (112, 204, 224, 304, 324), said leg portions (112, 204, 224, 304, 324) having a shape with a varying inclination, and wherein
said joint arms (18, 20) engaging with said recesses (22, 24, 102) of said intermediate portion (16, 100) are shaped in a manner corresponding to said cross sections of said recesses (22, 24, 102)
**characterized in that**
said cross-section of said recesses (22, 24, 102) is substantially parabola-shaped.

2. The joint according to claim 1, wherein said leg portions (112, 204, 224, 304, 324) have a curved shape.

3. The joint according to claim 1, wherein said leg portions (112, 204, 224, 304, 324) comprise lines forming an angle to each other.

4. The joint according to one of the claims of 1 to 3, wherein said base portion (110, 202, 222, 302, 322) of said cross-section is realized with a curved shape on each opposing end in the zone of transition to said leg portions (112, 204, 224, 304, 324).

5. The joint according to one of the claims of 1 to 4, wherein said leg portions (112, 204, 224, 304, 324) are formed symmetrically to each other.

6. The joint according to one of the claims 1 to 4, wherein said leg portions (112, 204, 224, 304, 324) are formed asymmetrically to each other.

7. The joint according to one of the claims 1 to 6, wherein said joint yokes (12, 14) are integrally formed.

8. The joint according to one of the claims 1 to 6, wherein said joint yokes (12, 14) are formed of several parts.

9. The joint according to one of the claims 1 to 8, wherein said joint yokes (12, 14) and said intermediate portion (16, 100) are manufactured from different materials.

10. The joint according to one of the claims 1 to 9, wherein said joint yokes (12, 14) and/or said intermediate portion (16, 100) are surface-treated in contact regions at least section by section.

11. The joint according to claim 10, wherein a thermal coating is used as a surface-treatment.

12. A joint yoke for a joint (10), especially for a joint (10) according to one of the claims 1 to 11, each comprising two opposing joint arms (18, 20) each having a cross-section comprising substantially a base portion (110, 202, 222, 302, 322) and two opposing leg portions (112, 204, 224, 304, 324), wherein said leg portions (112, 204, 224, 304, 324) have a shape with a varying inclination,
**characterized in that**
said cross-section of said joint arms (18, 20) is substantially parabola-shaped.

13. The joint yoke according to claim 12, which is coated with molybdenum in contact regions at least section by section.

14. An intermediate portion for a joint (10), especially for a joint (10) according to one of the claims 1 to 11, comprising four recesses (22, 24, 102) arranged with an angle between them, wherein said recesses (22, 24, 102) each have a cross-section comprising substantially a base portion (110, 202, 222, 302, 322) and two opposing leg portions (112, 204, 224, 304, 324), wherein said leg portions (112, 204, 224, 304, 324) are shaped with a varying inclination,
**characterized in that**
said cross-section of said joint arms (18, 20) is substantially parabola-shaped.

15. The intermediate portion according to claim 14, wherein said four recesses (22, 24, 102) are arranged to each other with angles of 90 degrees.

## Revendications

1. Joint comprenant deux fourches de joint (12, 14) et une pièce intermédiaire (16, 100), dans lequel
les deux fourches de joint (12, 14) comprennent chacune deux bras de joint mutuellement opposés (18, 20),
la pièce intermédiaire (16, 100) comprend quatre entailles (22, 24, 102) agencées sous un angle les unes par rapport aux autres,
les deux fourches de joint (12, 14) s'engagent, en étant tournées l'une par rapport à l'autre, chacune sur des côtés opposés de la pièce intermédiaire (16, 100) avec les bras de joint (18, 20) dans des entailles (22, 24, 102) de la pièce intermédiaire (16, 100), dans lequel
les entailles (22, 24, 102) ont chacune une section transversale qui inclut essentiellement une portion de base (110, 202, 222, 302, 322) et deux portions de branche mutuellement opposées (112, 204, 224, 304, 324), telles que les portions de branche (112, 204, 224, 304, 324) ont un tracé avec pente variable, et dans lequel
les bras de joint (18, 20), qui s'engagent dans des entailles (22, 24, 102) de la pièce intermédiaire (16, 100), sont réalisés en correspondance des sections transversales de ces entailles (22, 24, 102),
**caractérisé en ce que**
la section des entailles (22, 24, 102) est réalisée essentiellement en forme de parabole.

2. Joint selon la revendication 1, dans lequel les portions de branche (112, 204, 224, 304, 324) ont un tracé incurvé.

3. Joint selon la revendication 1, dans lequel les portions de branche (114, 204, 224, 304, 324) incluent des lignes disposées sous un angle les unes par rapport aux autres.

4. Joint selon l'une des revendications 1 à 3, dans lequel la portion de base (110, 202, 222, 302, 322) de la section transversale est réalisée respectivement de façon cintrée aux extrémités opposées dans la région de la transition vers les portions de branche (112, 204, 224, 304, 324).

5. Joint selon l'une des revendications 1 à 4, dans lequel les portions de branche (112, 204, 224, 304, 324) sont réalisées symétriquement les unes par rapport aux autres.

6. Joint selon l'une des revendications 1 à 4, dans lequel les portions de branche (112, 204, 224, 304, 324) sont réalisées de manière asymétrique les unes par rapport aux autres.

7. Joint selon l'une des revendications 1 à 6, dans lequel les fourches de joint (12, 14) sont réalisées d'un seul tenant.

8. Joint selon l'une des revendications 1 à 6, dans lequel les fourches de joint (12, 14) sont réalisées en plusieurs pièces.

9. Joint selon l'une des revendications 1 à 8, dans lequel les fourches de joint (12, 14) et la pièce intermédiaire (16, 100) sont fabriquées en matériaux différents.

10. Joint selon l'une des revendications 1 à 9, dans lequel les fourches de joint (12, 14) et/ou la pièce intermédiaire (16, 100) est/sont traitées en surface au moins par portions dans des zones de contact.

11. Joint selon la revendication 10, dans lequel un revêtement thermique est utilisé à titre de traitement de surface.

12. Fourche de joint pour un joint (10), en particulier pour un joint (10) selon l'une des revendications 1 à 11, qui comprend deux bras de joint mutuellement opposés (18, 20) qui présentent chacun une section transversale qui inclut sensiblement une portion de base (110, 202, 222, 302, 322) et deux portions de branche mutuellement opposées (112, 204, 224, 304, 324), dans laquelle les portions de branches (112, 204, 224, 304, 324) ont un tracé avec pente variable,
**caractérisée en ce que**
la section transversale des bras de joint (18, 20) est réalisée sensiblement en forme de parabole.

13. Fourche de joint selon la revendication 12, qui est revêtue de molybdène au moins par portions dans des zones de contact.

14. Pièce intermédiaire pour un joint (10), en particulier pour un joint (10) selon l'une des revendications 1 à 11, qui comporte quatre entailles (22, 24, 102) agencées sous un angle les unes par rapport aux autres, dans laquelle les entailles (22, 24, 102) présentent chacune une section transversale qui inclut sensiblement une portion de base (110, 202, 222, 302, 322) et deux portions de branche mutuellement opposées (112, 204, 224, 304, 324), dans laquelle les portions de branche (112, 204, 224, 304, 324) ont un tracé avec pente variable,
**caractérisée en ce que**
la section transversale des entailles (22, 24, 102) est réalisée sensiblement en forme de parabole.

15. Pièce intermédiaire selon la revendication 14, dans laquelle les quatre entailles (22, 24, 102) sont agencées sous des angles de 90° les unes par rapport aux autres.
